# EUROPEAN PATENT SPECIFICATION

(11) **EP 1 449 880 B1**
(45) Date of publication and mention of the grant of the patent: **18.01.2006**
(21) Application number: 02767884.6
(22) Date of filing: 04.09.2002
(51) Int. Cl.: C08L 25/04, C08K 5/03, C08K 5/06, C08K 3/22

(54) **FLAME−RETARDANT STYRENE RESIN COMPOSITION**
FLAMMWIDRIGE STYROLHARZZUSAMMENSETZUNG
COMPOSITION DE RESINE STYRENIQUE IGNIFUGE

(30) Priority: 24.10.2001 JP 2001325993; 13.03.2002 JP 2002068298
(43) Date of publication of application: 25.08.2004
(73) Proprietor: DAI-ICHI KOGYO SEIYAKU CO., LTD., Kyoto-shi, Kyoto 600-8873 (JP)
(72) Inventor: ONISHI, Hideaki, Otsu-shi, Shiga 520-0821 (JP); KONDO, Hideto, Kyoto-shi, Kyoto 612-8496 (JP)
(74) Representative: Kinzebach, Werner
(86) International application number: PCT/JP2002/009001
(87) International publication number: WO 2003/035749

(56) References cited:
- GB-A- 2 085 898
- JP-A- 8 092 443
- JP-A- 8 291 241
- JP-A- 11 012 416
- JP-A- 2002 234 964
- US-A- 3 677 942
- US-A- 4 301 058
- US-A- 4 829 118

## Description

### FIELD OF THE INVENTION

This invention relates to a styrene-based plastic composition which has an excellent flame retardancy and is self-extinguishable by melt-dripping. The composition comprises a plurality of flame retardants which exhibit when used in combination a synergistic effect on the flame retardancy. Since the combined flame retardants exhibit desired flame retardancy even in small amounts of addition and are highly heat stable and less detriorative to the appearance and mechanical properties of the plastics, a cost effective flame-retarded styrene-based plastic composition having an excellent moldability may be provided for use in fabricating housings and parts of household and office automation apparatus and equipments as well as other flame retarded articles of melt-dripping type.

### BACKGROUND PRIOR ART

Styrene-base plastics are widely used to fabricate housings and parts of household and office automation apparatus and equipments utilizing their excellent moldability, appearance and mechanical properties. For these applications, the fabricated articles are required to be flame retarded to avoid dangerous firing and flame-retarded styrene-based plastic compositions containing a halogenated flame retardant have been used to date. In addition to the flame retardancy, the plastic compositions are required to have increased heat stability, heat resistance, melt-flowability, impact strength and other properties for such applications.

A typical example of cases where fabricated plastic products are required to be self-extinguishable by melt-dripping is to produce plastic articles meeting grade V-2 in the vertical burning test method according to UL-94 standard of Underwriters Laboratoires. JP-B-5904360 and JP-B-62034784 disclose a flame retarding technology to achieve the above requirement by incorporating hexabromocyclododecane known to be effective in small amounts of addition into plastics. Hexabromocyclododecane is, however, thermally decomposed at a relatively low temperature. Therefore, when comounding with plastics under heat it decreases the heat stability of the resulting composition and changes color thereof from bright to dark.

German Patent No. 2,150,700 discloses bis(2,3-dibromopropyl) ether of tetrabromobisphenol A as a flame retardant having improved heat stability compared to hexabromocyclododecane. This flame retardant is still not satisfactory in heat stability and may produce scorching when used for instance, in the hot runner molding technique to shorten the molding cycle time and improve the efficiency of molding operations.

JP-A-05140389 discloses use of certain heat stabilizers in combination with bis(2,3-dibromopropyl) ether of tetrabromobisphenol A to remedy the above defect. The heat stability of the above flame retardant was found to be not entirely satisfactory in practice by this approach.

Use of another flame retardant in combination with tetrabromobisphenol A bis(2,3-dibromopropyl)ether has been proposed. JP-A-04239548 and JP-A-04292646 disclose a bromine-containing organic phosphorus compound and a bromine-containing epoxy polymer, respectively as a flame retardant to be combined. These proposals are proven, however, to be not entirely effective to increase the heat stability or deteriorative to the heat resistance, impact strength and other properties of plastics because a relatively large amount must be added.

JP-A-08208939 discloses a styrene-based plastic composition having well-balanced heat resistance, impact strength and heat stability containing a polyhalogenated diphenylalkane and an organopolysiloxane. Polyhalogenated diphenylalkane itself is, however, not uniformly dispersible in the plastics and the composition are often not stable in properties among different batches and also exhibit poor flowability.
US 3,677,942 discloses a flame retardant formulation comprising (a) either a bromine-substituted hydrocarbon having from 2 to 4 carbon atoms and at least 4 bromine atoms in the molecule, or a bromine-substituted phenol having from 2 to 5 bromine atoms in the aromatic nucleus; (b) a tris(bromoalkyl)phosphate, wherein the bromoalkyl groups comprise from 2 to 5 carbon atoms and at least two bromine atoms; and (c) a lead salt.

### SUMMARY OF THE INVENTION

The object of the present invention is to eliminate or ameliorate various problems associated with prior art.

The present invention provides an economically effective, flame-retarded styrene-based plastic composition having well-balanced properties including heat stability, heat resistance, melt-flowability and impact strength.

The composition comprises:
(A) a styrene-based plastic material;
(B) a brominated aromatic compound having a melting point from 200°C to 260°C in which all bromine atoms are attached to the aromatic ring;
(C) an organic compound having at least one 2,3-dibromopropyl group, selected from a 2,3-dibromopropyl ether of a chlorinated or brominated phenol, or tris(2,3-dibromopropyl)isocyanurate; and optionally
(D) antimony trioxide;

the proportions of components (B),(C) and (D) per 100 part by weight of the styrene-based plastic material (A) being such that the sum of (B) + (C) is 3 to 10 parts by weight in which (B) occupies 20 to 80 % by weight of the sum, and (D) is 0 to 3 part by weight.

### DESCRIPTION OF PREFERRED EMBODIMENTS

The term "styrene-based plastic material" as used herein refers to polystyrene, styrene- α -methylstyrene copolymer and other copolymers of styrene with minor proportions of comonomers such as butadiene, methyl methacrylate, acryloritrile, maleic anhydride or a derivative thereof or itaconic acid.

Examples of brominated aromatic compounds having a melting point from 200 °C to 260 °C (B) include tris(tribromophenoxy) triazine (m.p.about 230°C), a mixture thereof with dibromophenoxy-bis(tribromophenoxy) triazine and/or bis(dibromophenoxy)-tribromophenoxytriazine, bis(tribromophenoxy)ethane (m.p. about 225 °C) and brominated trimethylphenylindane (m.p. 235-255 °C). Because all bromine atoms are directly attached to the aromatic ring, component (B) itself is thermally stable. In contrast, similar compounds having a melting point lower than 200°C adversely affects the heat resistance of the resulting plastic composition while those compounds having a melting point higher than 260°C are not homogeneously dispersible in the plastic material because it does not melt at the process temperature of the plastic material.

Organic compounds having at least one 2,3-dibromopropyl group (C) include 2,3-dibromopropyl ethers of chlorinated or brominated phenols and tris(2,3-dibromopropyl)isocyanurate. Specific examples thereof include the following:
1-(2,3-dibromopropoxy)-2,4,6-tribromobenzene;
1-(2,3-dibromopropoxy)-2,4-dibromobenzene;
4,4'-bis(2,3-dibromopropoxy)-3,3',5,5'-tetrabromobiphenyl;
bis[4-(2,3-dibromopropoxy)-3,5-dibromophenyl] methane;
1,1-bis[4-(2,3-dibromopropoxy)-3,5-dibromophenyl] ethane;
2,2-bis[4-(2,3-dibromopropoxy)-3,5-dibromophenyl] propane;
bis[4-(2,3-dibromopropoxy)-3,5-dichlorophenyl] methane;
1,1-bis[4-(2,3-dibromopropoxy)-3,5-dichlorophenyl] ethane;
2,2-bis[4-(2,3-dibromopropoxy)-3,5-dichlorophenyl] propane;
bis[4-(2,3-dibromopropoxy)-3,5-dibromophenyl] sulfide;
bis[4-(2,3-dibromopropyl)-3,5-dibromophenyl] sulfoxide;
bis[4-(2,3-dibromopropyl)-3,5-dibromophenyl] sulfone; and
tris(2,3-dibromopropyl) isocyanurate.

Antimony trioxide (D) which is known to be a flame retardancy enhancer may optionally added. Particles having an average diameter of 0.4 to 1.2 µm are preferred for ease of dispersion in the plastic material. The sum of proportions of component (B) and component (C) is 3 to 10 parts by weight per 100 parts by weight of the plastic material (A). The desired flame retardancy level will not be obtained with a proportion less than the above range while a proportion higher than the above range is not only uneconomical but also adversely affects the strength properties and impact strength in particular of the resulting composition.

The proportion of antimony trioxide (D) is, if used, should be up to 3 parts by weight per 100 parts by weight of the plastic material (A). Excessive addition thereof does not further enhance the flame retardancy and adversely affects the thermal stability, impact strenght, melt-flowability and other properties of the resulting composition.

It is important for the present invention that the weight ratio B/(B+C) lies between 0.2 to 0.8. In other words, the bromine-containing flame retardant combination consists of 20 to 80 % by weight of component (B) and the balance of component (C). When departing from the above range, the balance between the flame retardancy and other properties of the resulting plastic composition will be lost and these properties will not be significantly different compared to the addition of respective components separately.

The temperature at which all components of the flame retarded plastic composition of the present invention are blended together preferably lies between 180°C and 260°C. Since it is important for component (B) to be blended in molten state with the styrene-based plastic material (A), the blending process is advantageously carried out at a temperature close the melting point of component (B). Component (C) normally has a melting point below 150°C and decreases the melting point of component (B) when mixed. The blending process may, therefore, be carried out at a temperature slightly lower than the melting point of component (B). However, a blending temperature higher than 260°C should be avoided since component (C) will be thermally decomposed at such temperatures to darken the plastic material.

The flame retarded plastic composition of the present invention may be processed into fabricated articles at the conventional fabricating temperature for styrene-based plastic materials. Once blended homogeneously, no concern is needed about the melting point of component (B).

The flame retarded styrene-based plastic composition of the present invention may comprise a variety of other conventional additives provided that the beneficial properties of the composition are not compromised. Examples thereof include melt-dripping enhancers, heat stabilizers, antioxidants, UV absorbers, UV stabilizers, fillers, pigments, lubricants, mold release agents and antistatic agents.

### EXAMPLES

The following examples are offered to specifically illustrate the flame retarded plastic composition of the present invention without limiting the invention thereto.

### Examples 1-13 and Comparative Examples 1-14.

Formulations of the compositions of Examples and Comparative Examples are shown in Tables 1-5.

Component (B), component (C), antimony trioxide and antioxidant were initially mixed together in a vertical mixer for 3 minutes. Thereafter styrene-based plastic material (A) was added to the same mixer to obtain a dry blend. The blend was fed to a twin screw extruder provided with a barrel having an inner diameter of 20 mm and extruded through a die having an orifice diameter of 3 mm at a barrel temperature of 230°C. The extruded strand was cooled and solidified by passing through a water bath and cut into pellets. Test pieces were produced by injection molding the pellets using an injection molding machine at a mold temperature of 200°C and tested for flame retardancy, HDT, ball impact strength, Izod impact strength and thermal stability according to the test methods described below. Melt flow rate (MFR) was determined using the pellets before injection molding. The results obtained are shown in Tables 1-4.

The materials used in the formulations shown in Tables 1-5 and the test methods are as follows.

### Materials

1. Styrene-based plastic material (A)
   A#1: HI-PS, available from Toyo Styrene Co., Ltd. under the name of TOYO STYROL H650.
   A#2: ABS, available from Ube Cycon Ltd. under the name of CYCOLAC T .
   A#3: HI-PS, available from Toyo Styrene Co., Ltd. under the name of TOYO STYROL H450.
   A#4: HI-PS, available from Toyo Styrene Co., Ltd. under the name of TOYO STYROL H400.
2. Component (B)
   B#1: 2,4,6-tris(2,4,6-tribromophenoxy)-1,3,5-triazine, m.p. 231°C , available from Dai-Ichi Kogyo Seiyaku Co., Ltd. under the name of PYROGUARD SR-245.
   B#2: Brominated 1,1,3-trimethyl-3-phenylindane, m.p. 234-253°C , available from DSBG under the name of FR-1808.
3. Component (C)
   C#1: 2,2-bis[4-(2,3-dibromopropoxy)-3,5-dibromophenyl]propane, availble from Teijin Kasei Co., Ltd. under the name of FIRE GUARD FG-3100.
   C#2: Bis[4-(2,3-dibromopropoxy)-3,5-dibromophenyl]sulfone, available from Marubishi Yuka Co., Ltd. under the name of NONNEN PR-2.
   C#3: Tris(2,3-dibromopropyl)isocyanurate, available from Nippon Kasei Co., Ltd. under the name of TAIC-6B.
4. Reference compound (A)
   Decabromodiphenylethane, m.p. >300°C , available from Albemarle Corp. under the name of SAYTEX 8010.
5. Reference compound (B)
   Tribromophenol modified brominated epoxy oligomer, m.p. <200°C, available from Tohto Kasei Co., Ltd. under the name of TB-60.
6. Antimony trioxide
   Sb₂O₃ available from Dai-Ichi Kogyo Seiyaku Co., Ltd. under the name of PYROGUARD AN-800(T).
7. Antioxidant
   IRGANOX 1010, available from Ciba Specialty Chemicals, Ltd.
8. Filler
   Zinc borate, available from US BORAX under the name of FIRE BRAKE 297.
9. Pigment
   Titanium dioxide, available from Ishihara Sangyo Kaisha Ltd. under the name of PF711.

### Test methods

### 1. Flame retardancy

The vertial burning method according to UL-94 standard was followed. The thickness of the test piece was 3.2 mm.

### 2. MFR

A melt flow index tester, Model 120-FWP available from Yasuda Seiki Seisakusho, Ltd. was used. Test conditions for the formulations in the tables are as follows.

### a) Formulations containing plastic material A#1

Temperature 200°C, load 5 kgf, displacement distance 4 mm.

### b) Formulation containing plastic material A#2

Temperature 220°C, load 10 kgf, displacement distance 4 mm.

### 3. HDT heat distorsion temperature

JIS K-6871 was followed using a test piece having a width of 3.2 mm and a height of 12.7 mm. The temperature at which the deformation amount of the test piece reached 0.26 mm at a load of 8.4 kg was determined.

### 4. Izod impact strength

JIS K-6871 was followed at a notch length of 3.2 mm.

### 5. DuPont type ball impact tester was used.

A 1/4 inch radius steel ball was placed on a test piece having a thickness of 3.2 mm and a 500 g weight was dropped on the ball. The maximum height of drop distance at which the back of test piece remained uncracked was determined.

### 6. Thermal stability

The test compositions was allowed to stay in molten state at 230°C for 30 minutes in the injection molding machine and then injection molded. A control speciment was produced by repeating the above process without subjecting the composition to preheating in the machine for 30 minutes. The degree of coloring was evaluated as color difference between the test specimen and the control specimen according to the follow schedule.
ΔE<3, almost no coloring
ΔE=3-20, noticable coloring
ΔE>20, remarkable coloring

**Table 1**

| Material | Example | | | | |
|---|---|---|---|---|---|
| (parts by weight) | 1 | 2 | 3 | 4 | 5 |
| Component A#1,HI-PS | 100.0 | 100.0 | 100.0 | 100.0 | 100.0 |
| Component B#1 | 2.0 | 5.0 | 4.0 | 6.0 | - |
| Component B#2 | - | - | - | - | 3.5 |
| Component C#1 | 5.0 | 2.0 | - | - | 4.5 |
| Component C#2 | - | - | 3.5 | - | - |
| Component C#3 | - | - | - | 2.5 | - |
| Total flame retardants | 7.0 | 7.0 | 7.5 | 8.5 | 8.0 |
| B/(B+C) | 0.29 | 0.71 | 0.57 | 0.71 | 0.44 |
| Sb₂O₃ | 2.5 | 2.5 | 2.5 | 3.0 | 2.0 |
| Antioxidant | 0.2 | 0.2 | 0.2 | 0.2 | 0.2 |

| | Example | | | | |
|---|---|---|---|---|---|
| Test item | 1 | 2 | 3 | 4 | 5 |
| UL-94,V-2 | Pass | Pass | Pass | Pass | Pass |
| Dripping | Yes | Yes | Yes | Yes | Yes |
| MFR,g/10min. | 5.7 | 5.6 | 5.7 | 5.5 | 5.8 |
| HDT, °C | 80 | 81 | 81 | 80 | 80 |
| Izod impact,J/m | 67 | 70 | 68 | 66 | 69 |
| Ball impact,mm | 850 | 800 | 850 | 750 | 850 |
| Thermal stability,ΔE | <3 | <3 | <3 | <3 | <3 |

**Table 2**

| Material | Comparative Examples | | | | |
|---|---|---|---|---|---|
| (parts by weight) | 1 | 2 | 3 | 4 | 5 |
| Component A#1, HI-PS | 100.0 | 100.0 | 100.0 | 100.0 | 100.0 |
| Component B#1 | 8.0 | 11.0 | - | - | - |
| Ref.Compound A | - | - | - | 3.0 | - |
| Ref. Compound B | - | - | - | - | 6.0 |
| Component C#1 | - | - | 6.0 | 6.0 | 4.0 |
| Total flame retardants | 8.0 | 11.0 | 6.0 | 9.0 | 10.0 |
| Sb₂O₃ | 2.5 | 3.0 | 2.0 | 3.0 | 3.0 |
| Antioxidant | 0.2 | 0.2 | 0.2 | 0.2 | 0.2 |

| | Comparative Example | | | | |
|---|---|---|---|---|---|
| Test item | 1 | 2 | 3 | 4 | 5 |
| UL-94,V-2 | Not pass | Not pass | Pass | Pass | Pass |
| Dripping | Yes | No | Yes | Yes | Yes |
| MFR,g/10min. | 5.3 | 5.0 | 5.9 | 4.5 | 6.2 |
| HDT °C | 80 | 81 | 77 | 79 | 75 |
| Izod impact,J/m | 65 | 62 | 64 | 62 | 58 |
| Ball impact,mm. | 500 | 400 | 800 | 500 | 250 |
| Thermal stability | <3 | <3 | 3-20 | <3 | <3 |

| | | | | | |
|---|---|---|---|---|---|
| Remarks: Comparative Example 4 additional contains 0.01 parts of organopolysiloxane TSF451-100 available from Toshiba Silicone Co. | | | | | |

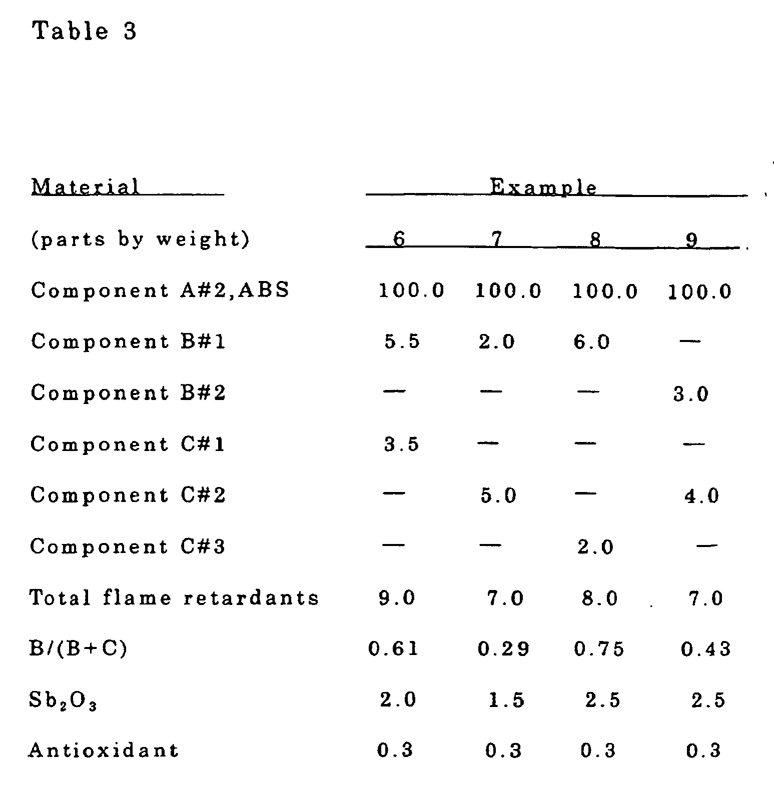

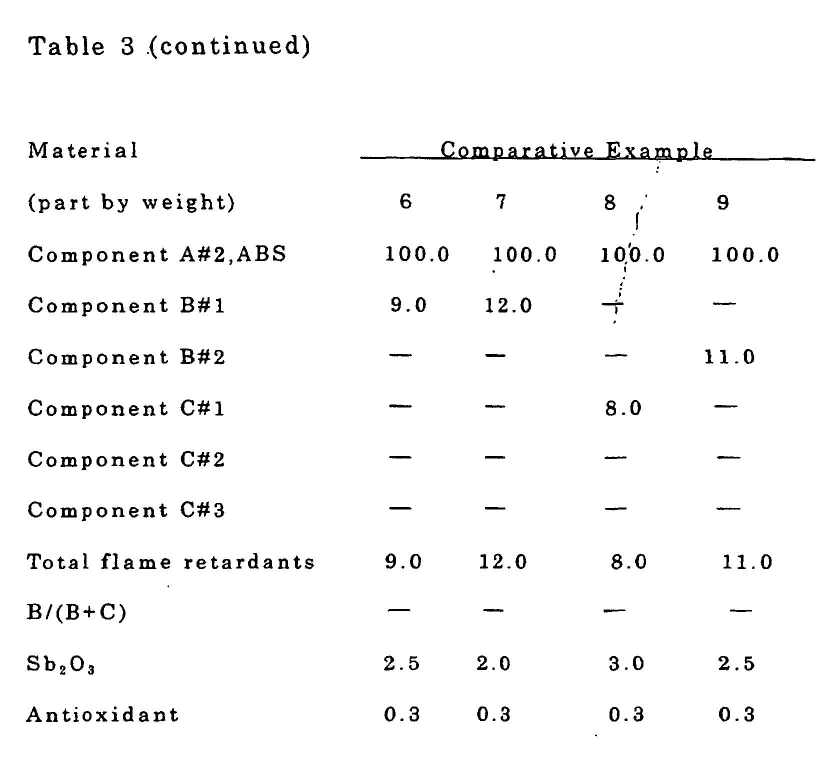

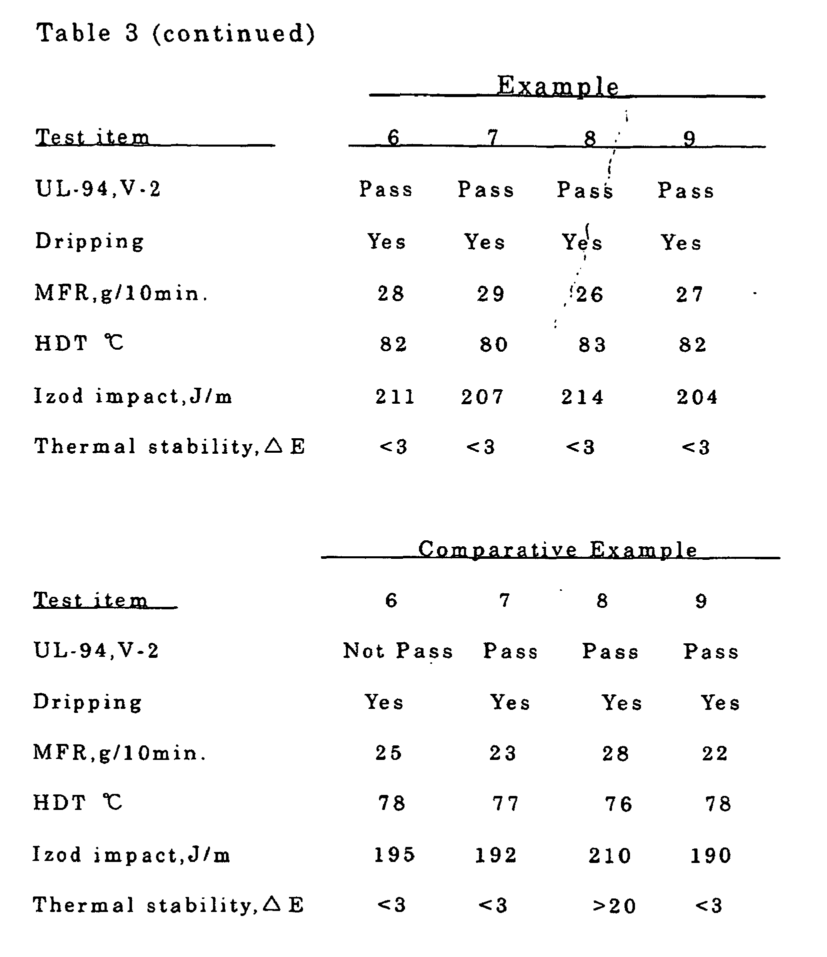

**Table 4**

| Material | Example | | | Comp. Exam | | |
|---|---|---|---|---|---|---|
| (parts by weight) | 10 | 11 | 12 | 10 | 11 | 12 |
| Component A#3,HI-PS | 100.0 | 100.0 | 100.0 | 100.0 | 100.0 | 100.0 |
| Component B#1 | 4.5 | 3.5 | 4.5 | 12.0 | ― | - |
| Component C#1 | 3.0 | 3.5 | 2.0 | ― | 7.5 | 9.0 |
| Total flame retardant | 7.5 | 7.0 | 6.5 | 12.0 | 7.5 | 9.0 |
| B/(B+C) | 0.60 | 0.50 | 0.69 | - | - | - |
| Sb₂O₃ | - | - | 1.0 | - | - | - |
| Antioxidant | 0.2 | 0.2 | 0.2 | 0.2 | 0.2 | 0.2 |
| Filler | - | 1.0 | - | - | - | 3.0 |
| Pigment | 1.0 | 0.5 | 0.5 | 1.0 | 1.0 | - |

| Test item | Example | | | Comp. Example | | |
|---|---|---|---|---|---|---|
| | 10 | 11 | 12 | 10 | 11 | 12 |
| UL-94,V-2 | Pass | Pass | Pass | Not pass | Not pass | Pass |
| Dripping | Yes | Yes | Yes | No | Yes | Yes |
| MFR, g/10min. | 10.5 | 10.0 | 10.2 | 10.0 | 10.8 | 9.6 |
| HDT °C | 77 | 80 | 78 | 76 | 75 | 76 |
| Izod impact, J/m | 67 | 67 | 68 | 62 | 64 | 58 |
| Ball impact,mm | 900 | 850 | 850 | 650 | 800 | 400 |
| Thermal stability,Δ E | <3 | <3 | <3 | <3 | 3-20 | 3-20 |

**Table 5**

| Material | | | |
|---|---|---|---|
| (parts by weight) | Ex.13 | Comp.Ex.13 | Comp.Ex.14 |
| Component A#1,HI-PS | 70.0 | 70.0 | 70.0 |
| Component A#4,HI-PS | 30.0 | 30.0 | 30.0 |
| Component B#1 | 2.6 | 8.0 | ― |
| Component C#1 | 1.4 | ― | 4.0 |
| Total flame retardant | 4.0 | 8.0 | 4.0 |
| B/(B+C) | 0.65 | 1.00 | ― |
| Sb₂O₃ | 0.5 | 1.0 | 0.5 |
| Antioxidant | 0.2 | 0.2 | 0.2 |

| Test item | | | |
|---|---|---|---|
| UL-94,V-2 | Pass | Pass | Pass |
| Dripping | Yes | Yes | Yes |
| MFR,g/10min. | 8.8 | 7.8 | 9.0 |
| HDT,°C | 76 | 78 | 7.4 |
| Izod impact,J/m | 65 | 58 | 62 |
| Ball impact, mm | 850 | 600 | 800 |
| Thermal stability, Δ E | <3 | <3 | >20 |

From the above test results, it will be appreciated that the flame retarded compositions of Examples are excellent in impact strength to the compositions of Comparative Examples containing component (B) alone and in thermal stability relative to compositions of Comparative Examples containing component (C) alone.

The composition of Comparative Example 4 containing Reference flame retardant compound (A) in combination with component (C) exhibits the desired level of flame retardancy but is inferior to the compositions of Examples in MFR and impact strength.

The composition of Comparative Example 5 containing an amount of Reference flame retardant compound B sufficient to exhibit the desired level of flame retardancy in combination with component (C) is inferior to the compositions of Examples in thermal deformation temeprature and impact strength.

Table 5 demonstrates that the combined use component (B) and component (C) in Example 13 results in higher impact strengh than the use component (B) alone in Comparative Example 13 and also in higher thermal stability than the use of compoeont (C) alone in Comparative Example 14.

Table 4 demonstrates that component (B) or component (C) alone is not effective to impart the composition with the desired level of flame retardancy unless antimony trioxide is used but the desired level of flame retardancy may be achieved without antimony trioxide when component (B) and component (C) are used in combination.

## Claims

1. A flame-retarded plastic composition comprising:
(A) a styrene-based plastic material;
(B) a brominated aromatic compound having a melting point from 200°C to 260°C in which all bromine atomes are attached to the aromatic ring;
(C) an organic compound having at least one 2,3-dibromopropyl group selected from a 2,3-dibromopropyl ether of a chlorinated or brominated phenol, or tris(2,3-dibromopropyl)isocyanurate; and optionally
(D) antimony trioxide;
the proportions of components (B), (C) and (D) per 100 parts of the styrene-based plastic material (A) being such that the sum of (B) + (C) is 3 to 10 parts by weight in which (B) occupies 20 to 80 % by weight of the sum, and (D) is 0 to 3 parts by weight.

2. The composition according to claim 1 wherein said component (B) is selected from the group consisting of tris(tribromophenoxy)triazine, a mixture thereof with dibromophenoxy-bis(tribromophenoxy)triazine and/or bis(dibromophenoxy)-tribromophenoxytriazine, bis(tribromophenoxy)ethane and brominated trimethyl - phenylindane.

3. The composition according to claim 1 or 2 wherein said component (C) is selected from the group consisting of
1-(2,3-dibromopropoxy)-2,4,6-tribromobenzene;
1-(2,3-dibromopropoxy)-2,4-dibromobenzene;
4,4'-bis(2,3-dibromapropoxy)-3,3',5,5'-tetrabromobiphenyl;
bis[4-(2,3-dibromopropoxy)-3,5-dibromophenyl] methane;
1,1-bis[4-(2,3-dibromopropoxy)-3,5-dibromophenyl] ethane;
2,2-bis[4-(2,3-dibromopropoxy)-3,5-dibromophenyl] propane;
bis[4-(2,3-dibromopropoxy)-3,5-dichlorophenyl] methane;
1,1-bis[4-(2,3-dibromopropoxy)-3,5-dichlorophenyl] ethane;
2,2-bis[4-(2,3-dibromopropaxy)-3,5-dichlorophenyl] propane;
bis[4-(2,3-dibromopropoxy)-3,5-dibromophenyl] sulfide;
bis[4-(2,3-dibromopropyl)-3,5-dibromophenyl] sulfoxide;
bis[4-(2,3-dibromopropyl)-3,5-dibromophenyl] sulfone; and
tris(2,3-dibromopropyl)isocyanurate.

4. A flame-retarded plastic articles fabricated from the composition of one of claims 1 to 3.

## Patentansprüche

1. Flammfeste Kunststoffzusammensetzung, umfassend:
(A) ein Kunststoffmaterial auf Styrolbasis;
(B) eine bromierte aromatische Verbindung mit einem Schmelzpunkt von 200 °C bis 260 °C, in der alle Bromatome an den aromatischen Ring gebunden sind;
(C) eine organische Verbindung mit wenigstens einer 2,3-Dibrompropylgruppe, ausgewählt unter einem 2,3-Dibrompropylether eines chlorierten oder bromierten Phenols oder Tris(2,3-dibrompropyl)isocyanurat; und gegebenenfalls
(D) Antimontrioxid;
wobei der Anteil der Komponenten (B), (C) und (D) pro 100 Teile des Kunststoffmaterials auf Styrolbasis (A) so sind, dass die Summe von (B) + (C) 3 bis 10 Gewichtsteile beträgt, wobei (B) 20 bis 80 Gewichtsprozent der Summe ausmacht, und (D) 0 bis 3 Gewichtsteile ausmacht.

2. Zusammensetzung nach Anspruch 1, wobei die Komponente (B) ausgewählt ist unter Tris(tribromphenoxy)triazin, einem Gemisch davon mit Dibromphenoxy-bis(tribromphenoxy)triazin und/oder Bis(dibromphenoxy)-tribromphenoxytriazin, Bis(tribromphenoxy)ethan und bromiertem Trimethylphenylindan.

3. Zusammensetzung nach Anspruch 1 oder 2, wobei die erwähnte Komponente (C) ausgewählt ist unter
1-(2,3-Dibrompropoxy)-2,4,6-tribrombenzol;
1-(2,3-Dibrompropoxy)-2,4-dibrombenzol;
4,4'-Bis(2,3-dibrompropoxy)-3,3',5,5'-tetrabrombiphenyl;
Bis[4-(2,3-dibrompropoxy)-3,5-dibromphenyl]methan;
1,1-Bis[4-(2,3-dibrompropoxy)-3,5-dibromphenyl]ethan;
2,2-Bis[4-(2,3-dibrompropoxy)-3,5-dibromphenyl]propan;
Bis[4-(2,3-dibrompropoxy)-3,5-dichlorphenyl]methan;
1,1-Bis[4-(2,3-dibrompropoxy)-3,5-dichlorphenyl]ethan;
2,2-Bis[4-(2,3-dibrompropoxy)-3,5-dichlorphenyl]propan;
Bis[4-(2,3-dibrompropoxy)-3,5-dibromphenyl]sulfid;
Bis[4-(2,3-dibrompropyl)-3,5-dibromphenyl]sulfoxid;
Bis[4-(2,3-dibrompropyl)-3,5-dibromphenyl]sulfon; und
Tris(2,3-dibrompropyl)isocyanurat.

4. Flammfeste Kunststoffartikel, hergestellt aus der Zusammensetzung nach einem der Ansprüche 1 bis 3.

## Revendications

1. Composition plastique ignifugée comprenant :
(A) un matériau plastique à base de styrène ;
(B) un composé aromatique bromé présentant un point de fusion compris entre 200 °C et 260 °C dans lequel tous les atomes de brome sont attachés au cycle aromatique ;
(C) un composé organique ayant au moins un groupe 2,3-dibromopropyl choisi parmi le 2,3-dibromopropyl éther d'un phénol chloré ou bromé, ou le tris(2,3-dibromopropyl)isocyanurate ;
(D) et de façon optionnelle, du trioxyde d'antimoine ;
les proportions des composants (B), (C) et (D) par 100 parties du matériau plastique à base de styrène (A) étant telles que la somme de (B) + (C) est égale à 3 à 10 parties en poids, (B) occupant 20 à 80 % en poids de la somme, et (D) est 0 à 3 parties en poids.

2. Composition selon la revendication 1, dans laquelle ledit composant (B) est choisi dans le groupe constitué de la tris(tribromophénoxy)triazine, un mélange de celle-ci avec la dibromophénoxy-bis(tribromophénoxy)triazine et/ou la bis(dibromophénoxy)-tribromophénoxytriazine, le bis(tribromophénoxy)éthane et le triméthyl-phénylindane bromé.

3. Composition selon la revendication 1 ou 2, dans laquelle ledit composant (C) est choisi dans le groupe constitué de :
1-(2,3-dibromopropoxy)-2,4,6-tribromobenzène ;
1-(2,3-dibromopropoxy)-2,4-dibromobenzène ;
4,4'-bis(2,3-dibromopropoxy)-3,3',5,5'-tétrabromobiphényl ;
bis[4-(2,3-dibromopropoxy)-3,5-dibromophényl] méthane ;
1,1-bis[4-(2,3-dibromopropoxy)-3,5-dibromophényl] éthane ;
2,2-bis[4-(2,3-dibromopropoxy)-3,5-dibromophényl] propane ;
bis[4-(2,3-dibromopropoxy)-3,5-dichlorophényl] méthane ;
1,1-bis[4-(2,3-dibromopropoxy)-3,5-dichlorophényl] éthane ;
2,2-bis[4-(2,3-dibromopropoxy)-3,5-dichlorophényl] propane ;
sulfure de bis[4-(2,3-dibromopropoxy)-3,5-dibromophényle] ;
bis[4-(2,3-dibromopropyl)-3,5-dibromophényl] sulfoxyde ;
bis[4-(2,3-dibromopropyl)-3,5-dibromophényl] sulfone ; et
tris(2,3-dibromopropyl)isocyanurate.

4. Article plastique ignifugé fabriqué à partir de la composition selon l'une des revendications 1 à 3.
